# EUROPÄISCHE PATENTSCHRIFT

(11) **EP 1 803 664 B1**
(45) Veröffentlichungstag und Bekanntmachung des Hinweises auf die Patenterteilung: **03.09.2014**
(21) Anmeldenummer: 06025510.6
(22) Anmeldetag: 09.12.2006
(51) Int. Cl.: B65G 47/51, B65G 69/18, B30B 11/08, B30B 15/32, A61J 3/10

(54) **Vorrichtung zur Unterbrechung eines kontinuierlichen Produktstroms einer Rundläuferpresse**
Apparatus for interrupting a continuous stream of products in a rotary press
Dispositif pour l'interruption d'un flux continu de produits dans une presse rotative

(30) Priorität: 28.12.2005 DE 102005062715
(43) Veröffentlichungstag der Anmeldung: 04.07.2007
(73) Patentinhaber: Fette Compacting GmbH, 21493 Schwarzenbek (DE)
(72) Erfinder: Nuppenau, Detlef, 23911 Salem (DE); Römer, Harald, 21465 Reinbek (DE); Kolbe, Sven, 21514 Büchen (DE); Schade, Frank, 23811 Anker (DE)
(74) Vertreter: Hauck Patent- und Rechtsanwälte

(56) Entgegenhaltungen:
- EP-A1- 1 108 967
- JP-A- 2003 206 018
- US-A- 3 429 423
- US-A- 5 804 772
- US-B1- 6 213 291

## Beschreibung

Die Erfindung bezieht sich auf eine Rundläuferpresse mit einer Vorrichtung zur Unterbrechung eines kontinuierlichen Produktstroms der Rundläuferpresse nach dem Patentanspruch 1.

Die in einer Rundläuferpresse gefertigten Produkte, z. B. Tabletten, werden mit Hilfe einer Abstreifvorrichtung von der Oberseite einer Matrizenscheibe abgestreift und gelangen zumeist über eine Rutsche zu einem Aufnahmebehälter oder auch wahlweise zu einer Teststation. Häufig werden die Produkte zunächst entstaubt, bevor sie abgepackt werden. Dies geschieht in einem sogenannten Entstauber.

Produkte einer Rundläuferpresse, die toxisches Material enthalten, müssen so gehandhabt werden, daß Bedienungspersonen, die sich im Produktionsraum aufhalten, nicht gefährdet werden. Daher ist auch bereits bekannt, den Pressenraum der Rundläuferpresse abzudichten und unter Unterdruck zu setzen, damit keine Stäube aus dem Pressenraum nach außen entweichen. Die Produkte werden abgeschirmt, aus dem Pressenraum herausgeleitet und gelangen zumeist in einen Isolator, d .h. in einen abgedichteten Raum, in dem weitere Prozesse stattfinden, beispielsweise eine Entstaubung oder aber auch Tests bezüglich der erwünschten Parameter der Produkte. Anschließend werden die Produkte aus dem Isolator in einen Produktbehälter gelenkt.

Um bei staubdichten Kapselungen von Rundläuferpressen einen unkontrollierten Austritt von Produktionsmaterial und Stäuben zu vermeiden, geschieht das Ein- und Ausschleusen von Produktionsmaterial über Öffnungen, die mit Sicherheitsklappen ausgestattet sind. Damit die Sicherheitsklappen zum An- und Abdocken von z. B. Produktenbehälter sicher geöffnet und verschlossen werden können, und auch kein verarbeitetes Produkt beschädigt wird, muß der Bereich der Klappen während des Schaltvorgangs frei von Produktmaterial gehalten werden. Dies geschieht bisher, indem die Ruzidläuferpresse gestoppt wird. Durch die Einleitung des Stoppvorgangs kommt es zum Erliegen des ansonsten kontinuierlichen Prozesses und zu Ausschußproduktion bei erneutem Anlaufen der Presse.

Aus Gründen raumsparender Fördermittel ist auch bekannt, der Rundläuferpresse eine Höhenfördervorrichtung zuzuordnen, die einen unteren Aufgabebereich und einen oberen Abgabebereich aufweist. Der Aufgabebereich ist unmittelbar mit dem Auslauf der Rundläuferpresse verbunden. Der Abgabebereich ist über ein entsprechendes Fördermittel mit dem Produktbehälter verbunden. In der Leitung zum Produktbehälter befindet sich eine Klappe oder ein Ventil, das geschlossen wird, während der Produktbehälter entfernt und durch einen anderen ersetzt wird. Soll die Produktion weiterlaufen, besteht die Gefahr, daß es zu Funktionsstörungen und Undichtigkeiten der Sicherheitsklappe kommen kann oder Tabletten durch das Schließen der Klappe beschädigt werden.

Aus EP 1 108 967 Al ist eine Vakuumtrocknungseinrichtung für pulver- oder granulatförmiges Material bekannt. Die Vorrichtung umfasst eine vibrierend angetriebene Höhenfördervorrichtung in einem Vakuumbehälter, in der eine Trocknung des Materials erfolgt. Abhängig von einem erreichten Trocknungsgrad kann das zu trocknende Material in einen Sammelbehälter gefördert werden oder der Höhenfördervorrichtung erneut zugeführt werden.

Aus US 5 804 772 ist eine Vorrichtung zum Aussondern einer gewünschten Anzahl von Produktstücken aus einem kontinuierlichen Produktstrom bekannt geworden. Die Vorrichtung umfasst ein Zuführbecken zur Aufnahme der Produkte, das mit einer spiralförmigen Höhenfördervorrichtung ausgestattet ist. Durch Vibrationsbewegungen des Zuführbeckens werden die Produkte entlang des spiralförmigen Förderwegs geführt. Der Produktstrom wird an einem ersten Auslass derart geteilt, dass eine geordnete Reihe von Produktstücken über den ersten Auslass kontinuierlich aus der Höhenfördervorrichtung entlassen wird. Der übrige Produktstrom wird in die Höhenfördervorrichtung zurückgeführt. Stromabwärts vom ersten Auslass ist eine einstellbare Weiche vorgesehen, mit der ein weiterer Teil des übrigen Produktstroms über einen zweiten Auslass aus der Höhenfördervorrichtung entlassen werden kann.

Aus JP 2003206018 A ist eine Vorrichtung zur Unterbrechung eine kontinuierlichen Produktstroms von Produkten einer Rundläuferpresse gemäss dem Oberbegriff des Anspruchs 1 bekannt.

Der Erfindung liegt die Aufgabe zugrunde, eine Vorrichtung zum Befüllen von Auf-nahmebehältern bzw. zur Unterbrechung des Produktstroms einer Rundläufcrpresse zu schaffen, die einen ununterbrochenen Prozeß der Rundläuferpresse auch bei einem Wechsel eines Aufnahmebehälters ermöglicht.

Diese Aufgabe wird durch die Merkmale des Patentanspruchs 1 gelöst.

Bei der erfindungsgemäßen Vorrichtung ist abströmseitig vom Abgabebereich der Höhenfördervorrichtung dem zweiten Fördermittel eine Weiche zugeordnet, und der Welche ist ein drittes Fördermittel zugeordnet, dessen unteres Ende dem Aufgabebereich der Höhenfördervorrichtung zugeordnet ist, wodurch die Produkte abhängig von der Stellung der Weiche dem zweiten oder dritten Fördermittel zugeführt werden.

Die Höhenfördervorrichtung ist beispielsweise eine vertikale zur Vibration angeregte Förderstrecke. Wird die Weiche so gestellt, daß der Abgabebereich der Höhenfördervorrichtung mit dem Aufgabebereich verbunden ist, dann werden die Produkte im Kreis gefördert, und die Höhenfördervorrichtung bildet einen Puffer, der einen kontinuierlichen Betrieb der Rundläuferpresse gewährleistet. Es versteht sich, daß nicht beliebig viele Produkte in die Pufferstrecke eingespeist werden können. Sie ist jedoch ausreichend aufnahmefähig, um die Zeit zu überbrücken, welche erforderlich ist für einen Austausch eines gefüllten mit einem leeren Aufnahmebehälter.

Vorzugsweise sind die Fördermittel linear, beispielsweise rutschenartige Rohre oder dergleichen. Die Höhenfördervorrichtung kann nach einer weiteren Ausgestaltung der Erfindung in einem geschlossenen bzw. abgedichteten Raum eines Isolators angeordnet sein.

Schließlich ist auch möglich, dem dritten Fördermittel ein offenes Gefäß zuzuordnen, in das die Produkte eingegeben werden, bevor sie dem Aufgabebereich der Höhenfördervorrichtung zugeführt werden. Aus diesem Gefäß können Produkte entnommen werden, beispielsweise zu Testzwecken. Sie können auch eingesehen werden, um sie auf ihre Qualität zu überprüfen.

Ein Ausführungsbeispiel der Erfindung soll anhand einer Zeichnung näher erläutert werden.

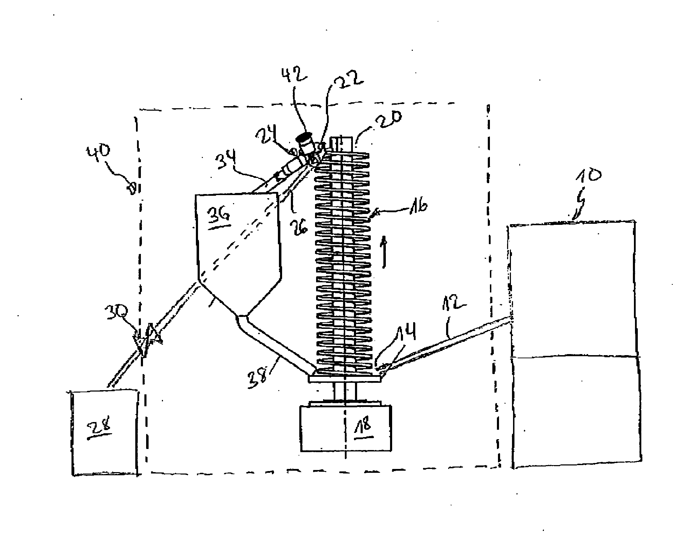

Die einzige Figur zeigt schematisch eine Vorrichtung nach der Erfindung.

In der Figur ist eine Rundläuferpresse 10 allgemein dargestellt, die z.B. einen abgedichteten Pressenraum aufweist, der z. B. durch geeignete Mittel unter Unterdruck gesetzt wird. Dies ist jedoch nicht dargestellt. Die gefertigten Produkte, z. B. Tabletten, gelangen über eine abfallende Rutsche 12 zu einem Aufgabebereich 14 einer vertikal angeordneten Förderstrecke 16, die gleichzeitig mit Hilfe einer Vibrationsvorrichtung 18 in Schwingungen versetzt wird. Die Tabletten gelangen nach oben in einen Abgabebereich 20. Von dort gelangen sie in einen Rohrabschnitt 22, an den sich eine Weiche 24 anschließt. Mit der Weiche ist eine erste rohrförmige Rutsche 26 verbunden, die zu einem Produktbehälter 28 führt, In der Rutsche 26 befindet sich ein als eine Schließklappe ausgeführtes Ventil 30, Produktbehälter 28 und Rundläuferpresse 10 stehen auf einem gemeinsamen Untergrund. Eine zweite Leitung 34 führt in ein Gefäß 36. Das untere Ende des Gefäßes ist über eine Leitung 38 ebenfalls mit dem Aufgabebereich 14 der Förderstrecke 16 verbunden.

Förderstrecke 16, Gefäß 36 und der größte Teil der Leitungen 26, 34 und 38 befinden sich im abgedichteten Raum eines sogenannten Isolators 40. In diesem abgedichteten Raum können auch Entstaubungsmittel vorgesehen werden, die hier jedoch nicht gezeigt sind.

Während des normalen Betriebes gelangen die Produkte aus der Rundläuferpresse 10 über die Förderstrecke 16 und die Leitung 26 in den Produktbehälter 28. Ist dieser gefüllt und soll durch einen leeren ausgetauscht werden, wird die Weiche 24 über eine nicht näher beschriebene Betätigung 42 umgeschaltet, und die Produkte gelangen über die Rutsche 26 in das Gefäß 36 und von dieser über die Rutsche 38 zum Aufgabebereich 14, Auf diese Weise werden die Produkte im Kreis befördert, und dieser Kreis bildet einen Puffer für ständig nachproduzierte Produkte, die kontinuierlich über die Rutsche 12 dem Aufgabebereich 14 zugeführt werden. In der Zwischenzeit ist auch das Ventil 30 geschlossen. Nachdem ein leerer Behälter anstelle des vollen Behälters 28 gestellt wurde, wird das Ventil 30 wieder geöffnet und die Weiche wird in die Öffnungsstellung zurückgestellt, so daß nunmehr der neue Produktbehälter mit den Produkten gefüllt werden kann.

## Patentansprüche

1. Rundläuferpresse mit einer Vorrichtung zur Unterbrechung eines kontinuierlichen Produktstroms von Produkten der Rundläuferpresse (10), mit einer Höhenfördervorrichtung (16), die einen unteren Aufgabebereich (14) aufweist, dem die Produkte über ein erstes Fördermittel zugeführt werden, und einem oberen Abgabebereich (20), von dem aus die Produkte über ein zweites Fördermittel (26) zu einem Aufnahmebehälter (28) befördert werden, **dadurch gekennzeichnet, dass** abströmseitig vom Abgabebereich (20) der Höhenfördervorrichtung (16) dem zweiten Fördermittel eine Weiche (24) zugeordnet ist, mit der Weiche (24) ein drittes Fördermittel verbunden ist, dessen unteres Ende dem Aufgabebereich (14) der Höhenfördervorrichtung (16) zugeordnet ist, wodurch die Produkte abhängig von der Stellung der Weiche (24) dem zweiten oder dritten Fördermittel zugeführt werden.

2. Rundläuferpresse nach Anspruch 1, **dadurch gekennzeichnet, dass** dem zweiten Fördermittel (26) eine Klappe(30)zugeordnet ist.

3. Rundläuferpresse nach Anspruch 1 oder 2, **dadurch gekennzeichnet, dass** erstes und/oder zweites und/oder drittes Fördermittel linear fördern.

4. Rundläuferpresse nach einem der Ansprüche 1 bis 3, **dadurch gekennzeichnet, dass** die Höhenfördervorrichtung (16) und die Weiche (24) im geschlossenen bzw. abgedichteten Raum eines Isolators (40) angeordnet sind.

5. Rundläuferpresse nach einem der Ansprüche 1 bis 4, **dadurch gekennzeichnet, dass** im Zuge des dritten Fördermittels ein offenes Gefäß (36) angeordnet ist, über das die Produkte zum Aufgabebereich der Höhenfördervorrichtung (16) geführt werden.

## Claims

1. Rotary press with a device for stopping a continuous product stream of products with a height conveyor which has a lower loading region to which the products are supplied via a first conveying means, and an upper delivery region, from which the products are conveyed to a reception container via a second conveying means, **characterized in that** on the downstream side of the delivery region (20) of the height conveyor (16) a switch (24) is assigned to the second conveying means, a third conveying device being connected to the switch (24), the lower end of which is assigned to the loading region (14) of the height conveyor (16), so that the products are supplied to the second or third conveying means depending on the condition of the switch (24).

2. Rotary press according to claim 1, **characterized in that** the flap (30) is associated with the second conveying means (26).

3. Rotary press according to claim 1 or 2, **characterized in that** the first and/or the second conveying means convey linearly.

4. Rotary press according to one of the claims 1 to 3, **characterized in that** the height conveyor (16) and the switch (24) are arranged in a closed or sealed up room, respectively, of an isolator (40).

5. Rotary press according to one of the claims 1 to 4, **characterized in that** an open vessel (36) is disposed in a course of the third conveying means, via which the products are lead to the loading region of the height conveyor (16).

## Revendications

1. Presse rotative avec un dispositif pour l'interruption d'un flux continu de produits de la presse rotative (10), avec un dispositif élévateur (16) qui présente une région d'alimentation inférieure (14) à laquelle les produits sont amenés par le biais d'un premier moyen de transport, et une région de distribution supérieure (20) de laquelle les produits sont transportés par le biais d'un deuxième moyen de transport (26) vers un récipient de réception (28), **caractérisée en ce qu'**un déflecteur (24) est associé au deuxième moyen de transport du côté sortie de la région de distribution (20) du dispositif élévateur (16), un troisième moyen de transport est relié au déflecteur (24) dont l'extrémité inférieure est associée à la région d'alimentation (14) du dispositif élévateur (16), moyennant quoi les produits sont amenés au deuxième ou troisième moyen de transport en fonction de la position du déflecteur (24).

2. Presse rotative selon la revendication 1, **caractérisée en ce qu'**un clapet (30) est associé au deuxième moyen de transport (26).

3. Presse rotative selon la revendication 1 ou 2, **caractérisée en ce que** les premier et/ou deuxième et/ou troisième moyens de transport transportent de manière linéaire.

4. Presse rotative selon l'une quelconque des revendications 1 à 3, **caractérisée en ce que** le dispositif élévateur (16) et le déflecteur (24) sont disposés dans l'espace fermé ou étanchéifié d'un isolateur (40).

5. Presse rotative selon l'une quelconque des revendications 1 à 4, **caractérisée en ce qu'**un réservoir ouvert (36) par le biais duquel les produits sont guidés vers la région d'alimentation du dispositif élévateur (16) est disposé dans le prolongement du troisième moyen de transport.
